# EUROPEAN PATENT APPLICATION

(11) **EP 4 372 693 A1**
(43) Date of publication of application: **22.05.2024**
(21) Application number: 22208431.1
(22) Date of filing: 18.11.2022
(51) Int. Cl.: G06T 17/00

(54) **METHOD FOR 3D RECONSTRUCTION, METHOD FOR TRAINING 3D RECONSTRUCTION NEURAL NETWORK SYSTEM AND COMPUTING SYSTEM**

(71) Applicant: TOYOTA JIDOSHA KABUSHIKI KAISHA, Toyota-shi, Aichi-ken 471-8571 (JP); The Chancellor, Masters and Scholars of the University of Cambridge, Cambridge CB2 1TN (GB)
(72) Inventor: OLMEDA REINO, Daniel, 1140 BRUSSELS (BE); ABBELOOS, Wim, 1140 BRUSSELS (BE); CHARLES, James, CAMBRIDGE CB2 1TN (GB); CIPOLLA, Roberto, CAMBRIDGE CB2 1TN (GB)
(74) Representative: Cabinet Beau de Loménie

(57) **Abstract**

A computer-implemented method for 3D reconstruction is provided. The method includes: receiving an input image depicting an object; encoding, by an encoder including one or more neural networks, the input image to a latent code; transforming, by a transcoder including one or more neural networks, the latent code to one or more 3D codes each controlling an attribute of a mathematical 3D representation of the object.

## Description

### TECHNICAL FIELD

The present invention relates generally to the field of computer vision, and, in particular, to a method for three-dimensional (hereinafter "3D") reconstruction, a method for training a 3D reconstruction neural network system and a computing system.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

3D reconstruction is a procedure of creating a mathematical 3D representation of an object. Given one or more two-dimensional (hereinafter "2D") views of an object, we want to know the 3D shape of the object. 3D reconstruction techniques infer the geometric structure of the object from the one or more 2D images.

Neural radiance fields (hereinafter "NeRFs") is a popular method of representing an object in 3D due to their high fidelity. This has spurred a number of works to look at recovering NeRFs from a single image or from multiple images taken from different perspectives. However, most methods require strong camera pose supervision from multi-view images, either hand or machine annotated, or synthetically derived. Reconstructing 3D objects from single-view RGB images remains a difficult computer vision task.

### SUMMARY

Unless otherwise stated, the word "or" herein is to be understood as "and/or".

In a first aspect, an embodiment of the present invention provides a computer-implemented method for 3D reconstruction. The method includes the following operations: receiving an input image depicting an object; encoding, by an encoder including one or more neural networks, the input image to a latent code; transforming, by a transcoder including one or more neural networks, the latent code to one or more 3D codes each controlling an attribute of a mathematical 3D representation of the object.

As such, by transforming the latent code, which controls attributes of a 2D input image, to the one or more 3D codes which govern the attribute(s) of the 3D representation of the object, the method according to the embodiment in the first aspect is able to reconstruct the 3D representation of the object from the single input image.

According to another embodiment in the first aspect, the 3D codes include a shape code including data values controlling a volume density of each point in a bounded 3D volume where the 3D representation of the object is to be located, and a colour code including data values controlling a colour value of each point in the 3D representation of the object.

According to still another embodiment in the first aspect, the method further includes an operation of determining, by a decoder including one or more neural networks, the volume densities and colour values of sampled points in the bounded 3D volume according to spatial locations of the sampled points and the data values of both the shape code and the colour code.

According to still another embodiment in the first aspect, the sampled points are generated by marching camera rays passing through pixels of the input image to the 3D volume and having the camera rays reflected off a plane including two coordinate axes of a 3D Cartesian coordinate system. The spatial locations are represented by 3D coordinates in the 3D coordinate system, and the object has a plane of symmetry in the plane including the coordinate axes.

According to still another embodiment in the first aspect, the transforming operation is implemented by a multi-layer perceptron of the transcoder.

According to still another embodiment in the first aspect, the method further including an operation of predicting, by the transcoder, an original view direction representing a camera viewpoint from which the input image was generated according to the latent code.

According to still another embodiment in the first aspect, the predicting operation includes an operation of processing, by an initial prediction block of a camera pose regressor of the transcoder, the latent code to predict a rough view direction, and operations of a refinement block of the camera pose regressor predicting a residual between the rough view direction and the original view direction according to the latent code and the rough view direction, and updating the rough view direction according to the residual.

According to still another embodiment in the first aspect, the method further includes an operation of receiving a user-input instruction indicating a camera view direction from which an output image of the object is to be generated, and an operation of synthesizing the output image based on one or more data values of the one or more 3D codes and the camera view direction indicated by the user-input instruction.

According to still another embodiment in the first aspect, the latent code is a latent code governing response of a generative adversarial network (hereinafter "GAN"). The encoding operation includes: using a GAN inversion algorithm to encode the input image to the latent code.

In a second aspect, an embodiment of the present invention provides a computer-implemented method for training a 3D reconstruction neural network system. The method includes an operation of pre-training a decoder of the neural network system. The pre-training operation includes operations of: processing, by the decoder, 3D codes controlling one or more attributes of mathematical 3D representations of objects to generate first processing results controlling the one more attributes; synthesizing, by the neural network system, first training output images according to the first processing results and camera view directions; determining the value of a first adversarial loss measuring difference between the first training output images and images in a first training data set; and updating the decoder using the first adversarial loss if the value is higher than a pre-set adversarial loss threshold.

According to another embodiment in the second aspect, the pre-training operation further includes an operation of sampling the 3D codes from one or more 3D code distributions of the first training data set, and sampling the camera view directions from a camera view direction distribution of the first training data set. Camera view directions from which training data of the first training data set was generated are not labelled.

According to still another embodiment in the second aspect, the pre-training operation further includes an operation of generating, by the neural network system, alpha masks of the first training output images, and an operation of determining the value of a first object mask loss measuring difference between the generated alpha masks and ground truth alpha masks of the first training output images. The updating operation includes an operation of updating the decoder using the first adversarial loss and the first object mask loss if the value of the first adversarial loss is higher than the pre-set adversarial loss threshold and the first object mask loss is higher than a pre-set mask loss threshold.

According to still another embodiment in the second aspect, the pre-training operation further includes: calculating principal vectors of bounded 3D volumes; and determining the value of a first pose constraint loss including sub-losses each measuring difference between the direction of one of the principal vectors and the direction of a 3D Cartesian coordinate axis in the 3D volume corresponding to the principal vector. The 3D representations of the objects are located in the bounded 3D volumes. The updating operation includes: updating the decoder using the first adversarial loss and the first pose constraint loss if the value of the first adversarial loss is higher than the pre-set adversarial loss threshold and the first pose constraint loss is higher than a pre-set pose constraint loss threshold.

According to still another embodiment in the second aspect, the method further includes an operation of fine-tuning the pre-trained decoder and a transcoder of the neural network system. The fine-tuning operation includes operations of: transforming, by the transcoder, latent codes governing attributes of training input images into 3D codes controlling one or more attributes of mathematical 3D representations of objects; predicting, by the transcoder, original camera view directions from which the training input images were generated based on the latent codes; processing, by the pre-trained decoder, the 3D codes to generate second processing results controlling the one or more attributes; synthesizing, by the neural network system, second training output images according to the second processing results and the predicted original camera view directions; determining one or more values of one or more reconstruction losses measuring difference between the second training output images and the training input images; and updating the pre-trained decoder or the transcoder using one of the one or more reconstruction losses if the value of the reconstruction loss is higher than a pre-set reconstruction loss threshold.

In a third aspect, an embodiment of the present invention provides a computing system. The computing system includes one or more processors configured to implement the method according to any one of the embodiments in the first aspect or the second aspect.

In a fourth aspect, an embodiment of the present invention provides a computer-readable storage medium storing instructions which, when executed by one or more processors, enable the one or more processors to perform the method according to any one of the embodiments in the first aspect or the second aspect.

### BRIEF DESCRIPTION OF THE DRAWINGS

Embodiments of the disclosure and advantages thereof will be described below in detail, by way of example, with reference to the accompanying schematic drawings introduced as follows.
**FIG. 1** is a flowchart illustrating a computer-implemented method for 3D reconstruction in accordance with the first embodiment disclosed herein.
**FIG. 2** is a block diagram of an exemplary 3D reconstruction neural network system in accordance with embodiments disclosed herein.
**FIG. 3(a)** is a block diagram of an exemplary style mapping network in accordance with embodiments disclosed herein.
**FIG. 3(b)** is a block diagram of an exemplary camera pose regressor in accordance with embodiments disclosed herein.
**FIGs. 4(a) and 4(b)** are flow charts illustrating the method for 3D reconstruction in accordance with the first embodiment disclosed herein.
**FIG. 5** is a flow chart illustrating an exemplary decoder in accordance with embodiments disclosed herein.
**FIGs. 6(a) and 6(b)** illustrate a sampling operation of the method for 3D reconstruction in accordance with the first embodiment disclosed herein.
**FIG. 7** is a flow chart illustrating the method for 3D reconstruction in accordance with the first embodiment disclosed herein.
**FIG. 8** is a flow chart illustrating the training method in accordance with the second embodiment disclosed herein.
**FIG. 9** is a flow chart illustrating an example of a pre-training operation of the training method in according with the second embodiment disclosed herein.
**FIGs. 10(a)****,** **10(b)****,** **11(a), 11(b)** **and** **12** illustrate examples of a fine-tuning operation of the training method in according with the second embodiment disclosed herein.
**FIG. 13** is a block diagram of an exemplary computing system in accordance with one or more embodiments disclosed herein.

For simplicity and clarity of illustration, the same reference numerals will be used throughout the figures to refer to the same or like parts, unless indicated otherwise.

### DESCRIPTION OF PARTICULAR EMBODIMENTS

The following description of the example embodiments refers to the accompanying drawings. It does not limit the disclosure. Instead, the scope of the disclosure is defined by the appended claims.

Where functional modules are referred to in the present invention for carrying out various steps (or operations) of the described method(s), it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It is to be understood that the figures and description of the present disclosure have been simplified to illustrate elements that are relevant for a clear understanding of the present disclosure, while eliminating, for the purpose of clarity, many other elements found in typical methods and computing systems for 3D reconstruction, and in typical methods and computing systems for training a 3D reconstruction neural network system.

As known in the art, the term "GAN" refers to a deep generative model that learns to generate new data through adversarial training. It includes two neural networks: a generator and a discriminator, which are trained jointly through an adversarial process. The objective of the generator is to synthesize fake data that resemble real data, while the objective of the discriminator is to distinguish between real and fake data. Through the adversarial training process, the generator tries to generate fake data that matches the real data distribution to "fool" the discriminator.

As used herein, the term "3D reconstruction" refers to the process of constructing a mathematical representation of an object in a 3D Euclidean space. As is known in the art, though named as "3D representation", such a representation includes N dimensions with N being an integer greater than or equal to 3, where three of the N dimensions correspond to dimensions in the 3D Euclidean space, and other dimension(s) may represent colour or other attribute of the representation. Relatedly, the term "3D code" only means that the code facilitates the 3D reconstruction of the object in a way as described in the description below, and a 3D code may include the same number of dimensions as the 3D representation.

Relatedly, the term "3D volume" herein means a volume in the 3D Euclidean space.

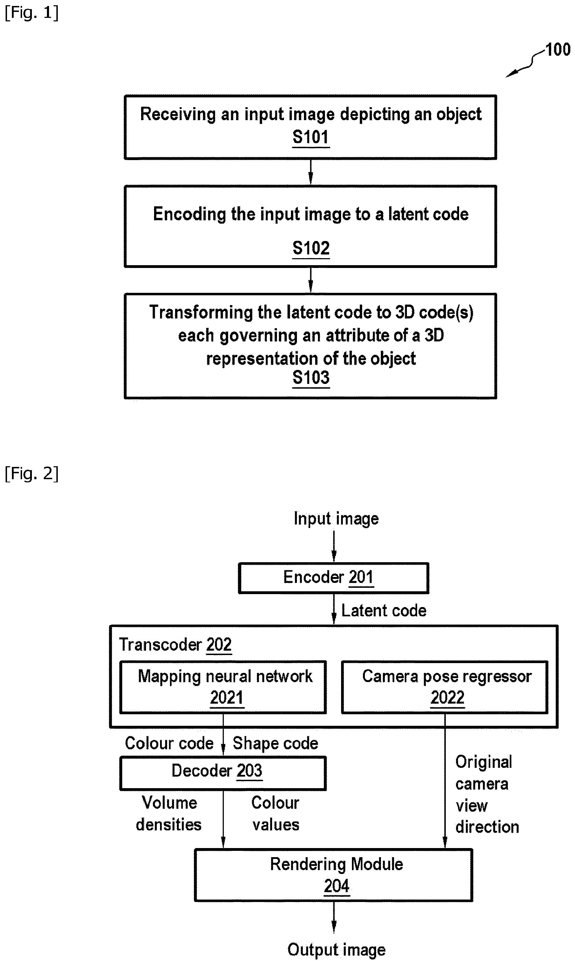

As illustrated by **Fig. 1****,** a method 100 for 3D reconstruction according to the first embodiment of the disclosure includes operations S101-S103. The method 100 may be performed by a 3D reconstruction neural network system 200 which is implemented by a program, custom circuitry, or a combination of custom circuitry and a program.

As an example, a neural network of the 3D reconstruction neural network system 200 is implemented as software instructions executed by a processor or, the processor includes a matrix of hardware elements configured to process a set of inputs (e.g., electrical signals representing values) to generate a set of outputs, which can represent activations of the neural network. Or, the neural network is implemented as a combination of software instructions and processing performed by a matrix of hardware elements.

As illustrated by **Fig. 2****,** the 3D reconstruction neural network system 200 includes a pre-trained encoder 201 and a pre-trained transcoder 202 each including one or more neural networks.

As illustrated by **Figs. 1** and **2****,** the neural network system 200 receives an input image depicting an object at the operation S101. At the operation S102, the pre-trained encoder 201 encodes the input image to a latent code, or outputs the latent code by processing the input image. In particular, the latent code may control different attributes of the input image, such as shape, colour or any other style of the image representation of the object. The latent code may be a set of data elements where similar data elements are closer together in space.

The input image may be a 2D image. It may be a color image such as an RGB image, or any other type of image that can be encoded to a latent code.

At the operation S103, the transcoder 202 transforms the latent code generated by the encoder 201 to one or more 3D codes each governing an attribute of a mathematical 3D representation of the object. In particular, the term "attribute of 3D representation" herein refers to an element of appearance of the 3D representation of the object. For example, one of the one or more attributes refers to the shape, size, color, or any other style of the 3D representation of the object, or refers to the shape, size, color, position, or existence of a part of the 3D representation.

The transformation performed by the transcoder 202 at the operation S103 may be any method that is able to infer, based on the latent code, one or more correct 3D codes governing the response of an unknown model (such as a NeRF-based model) which rendered the input image.

As such, by transforming the latent code, which governs a (2D) input image, to the one or more 3D codes which govern the attribute(s) of the 3D representation of the object, the method 100 according to the first embodiment may reconstruct the 3D representation of the object from the single input image. Each part of the method 100 will be discussed below in detail.

As an example, the latent code is one that governs response of a GAN. In such a case, at the operation S102 the neural network(s) of the encoder 201 implements a process which is known as GAN inversion. The generator of a pre-trained GAN maps a latent code **z** in the input latent space Z of the GAN to an image to be synthesized, whereas GAN inversion maps a source image to a latent code from which the generator of a pre-trained GAN can produce a close approximation to the source.

Examples of the GAN used for training the encoder 201 include deep convolutional GANs (hereinafter "DCGANs"), progressive growing GANs (hereinafter "PGGANs"), BigGANs, Wasserstein GANs (hereinafter "WGANs") and style-based GANs such as StyleGAN, StyleGAN2, StyleGAN2-Ada and StyleGAN3. At the operation S102 the encoder 201 may use any kind of GAN inversion method to generate the latent code. For example, at the operation S102 the encoder 201 may recover the latent code **z** in the input latent space Z of any kind of GAN or recover the intermediate latent code **w** in the intermediate latent space W of a style-based GAN. Or the encoder 201 may generate an extended latent code **w⁺** in an extended latent space W⁺ of a style-based GAN, a style code **s** in a style space S of a style-based GAN, or a latent code **x** in a P space of a style-based GAN. The following paper P1 and the papers cited by it describe the above-mentioned various GAN models and their corresponding GAN inversion methods, and the encoder 201 may encode the input image at the operation S102 using any of these GAN inversion methods:
W. Xia, Y. Zhang, Y. Yang, J. -H. Xue, B. Zhou and M. -H. Yang, "GAN Inversion: A Survey," in IEEE Transactions on Pattern Analysis and Machine Intelligence, 2022, doi: 10.1109/TPAMI.2022.3181070.

In particular, the latent code may be such that from it the generator of the GAN can produce an image whose similarity to the input image is maximized or higher than a threshold. Accordingly, the GAN may be used for training the encoder 201 to map a training image into a latent code such that an image reconstructed by the generator of the GAN based on the latent code is as similar to the original one as possible.

Accordingly, the input image may be any type of image that can be encoded to a latent code such that the generator of a pre-trained GAN can produce a close approximation of or faithfully reconstructs input image from the latent code.

As a further example, the GAN used in the training process of the encoder 201 is a style-based GAN. In addition, the encoder 201 may encode the input image into a latent code in the extended W⁺ latent space of the style-based GAN. For example, the encoder is a residual based encoder such as the Restyle model introduced in the following paper P2:
Y. Alaluf, O. Patashnik and D. Cohen-Or, "ReStyle: A Residual-Based StyleGAN Encoder via Iterative Refinement," 2021 IEEE/CVF International Conference on Computer Vision (ICCV), 2021, pp. 6691-6700, doi: 10.1109/ICCV48922.2021.00664.

In an implementation of the first embodiment, the one or more 3D codes are semantically editable. Accordingly, a user can manipulate an attribute of the 3D representation of the object as desired by varying data value(s) of a corresponding 3D code while retaining the other attributes for the 3D representation of the object. For example, the user may add, remove, or change the color, shape or position of a part of the 3D representation of the object by altering a corresponding 3D code.

Relatedly, the method 100 may further include an operation of determining new data values of one of the one or more 3D codes according to a user-input instruction.

In an implementation mode of the first embodiment, as illustrated by **Fig. 2****,** the 3D codes include a shape code and a colour code. The shape code includes data values governing a volume density of each point in a bounded 3D volume where the 3D representation of the object is to be located. The colour code includes data values controlling a colour value of each point in the mathematical 3D representation of the object. The colour value may be in any colour space. For example, the colour value is a red-green-blue (hereinafter "RGB") value, or a colour value in the CIELAN colour space, in the hue, saturation, lightness (hereinafter "HSL") colour space, or in the hue, saturation, value (hereinafter "HSV") colour space, etc.

As described in the following paper P3, the term "volume density" at a spatial location x can be interpreted as the differential probability of a ray terminating at an infinitesimal particle at the location x:
Ben Mildenhall, Pratul P. Srinivasan, Matthew Tancik, Jonathan T. Barron, Ravi Ramamoorthi, and Ren Ng. 2021. "NeRF: representing scenes as neural radiance fields for view synthesis". Commun. ACM 65, 1 (January 2022), 99-106. https://doi.org/10.1145/3503250.

As such, the shape code and the colour code are able to control the shape, size and colour of the 3D representation of the object.

In particular, the input image includes a foreground image consisting of pixels representing the object and a background consisting of pixels which do not represent the object. The input image may be taken in front of a solid color background, or may be synthesized by extracting the foreground from another image using a segmentation algorithm and then combining the foreground and a solid color background.

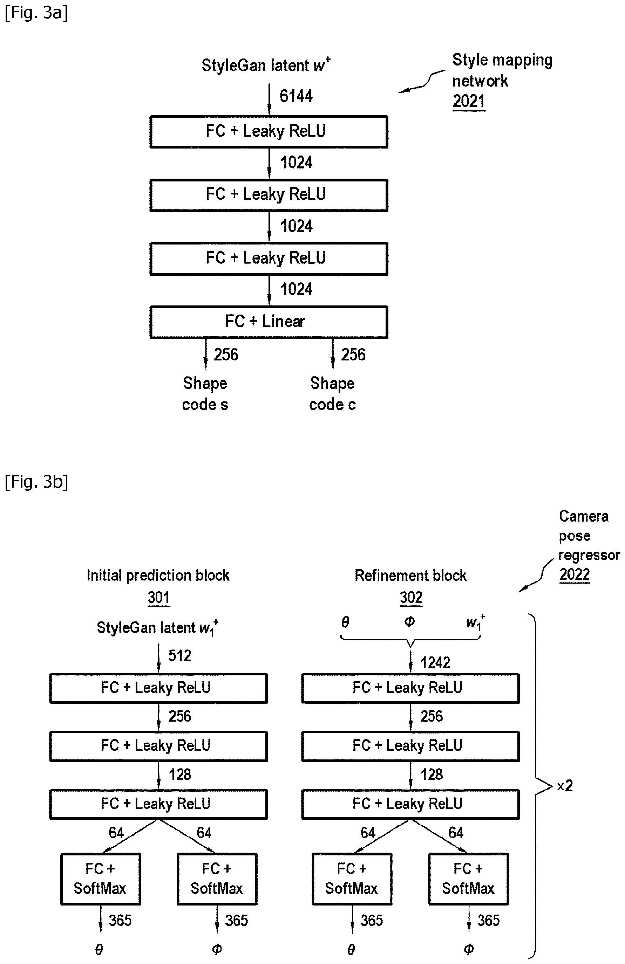

In an implementation mode of the transformation operation S103, the transformation is performed by a mapping neural network 2021 as illustrated by **Fig. 2****,** which includes a multilayer perceptron (hereinafter "MLP"). As an example, the MLP includes fully-connected (hereinafter "FC") layers and activation functions. The last layer of the FC layers may feed to a linear activation function and each of the other layer(s) feeds to a non-linear activation function such a leaky rectified linear unit (hereinafter "ReLU") activation function to generate the one or more 3D codes. **Fig. 3(a)** illustrates the architecture of an exemplary style mapping network 2021 which transforms an extended latent code **w⁺** in the extended latent space W⁺ of a style-based GAN to the colour code and the shape code. In the example the shape code and the colour code each have 256 dimensions.

As illustrated by **Fig. 2****,** the neural network system 200 may further include a decoder 203 which in turn includes one or more neural networks. The decoder 203 processes the one or more 3D codes so that the 3D representation of the object can be reconstructed by the neural network system 200 based on the processing result(s). For example, the processing result(s) governs the corresponding one or more attributes of the 3D representation of the object. The decoder 203 may be a NeRF-based model.

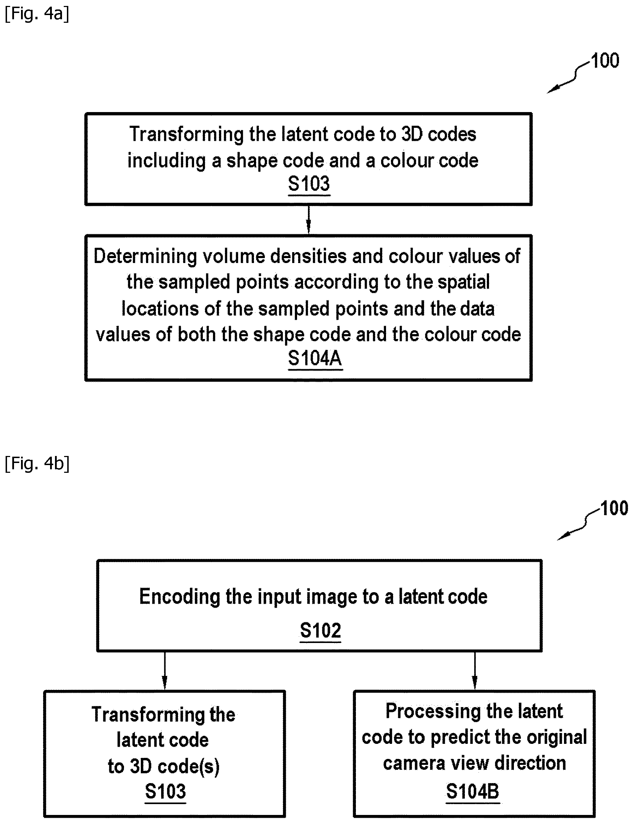

As illustrated by **Fig. 2** in combination with **Fig. 4(a)****,** in an implementation mode of the first embodiment, where the 3D codes include the shape code and the colour code as described above, the method 100 further includes an operation S104A of the decoder 203 determining volume densities and colour values of sampled points in the bounded 3D volume according to spatial locations of the sampled points and the data values of both the shape code and the colour code. Each spatial location may be represented as a 3D coordinate (x,y,z) in a 3D Cartesian coordinate system whose origin is at the center of the 3D volume.

The decoder 203 does not use the camera view direction to determine the colour values, which is typical in NeRFs for modelling viewpoint effects, so that the problem of multi-view inconsistency is remedied.

As an example, at the operation S104A the decoder 203 determines the volume densities of the sampled points according to the spatial locations of the sampled points and the data values of the colour code, and determines the colour values of the sampled points according to the spatial locations and the data values of the shape code. Additionally or alternatively, the operation S104A may be implemented by two neural networks each including an activation function. For example, one of the activation functions is conditioned on the colour code to produce the colour values of the sampled points and the other activation function is conditioned on the shape code to determine the volume densities of the sampled points. The spatial locations of the sampled points are taken as input by both activation functions, or by one of the activation functions, one layer of which feeds into the other activation function. The activation functions may be those suitable for implicit neural representations.

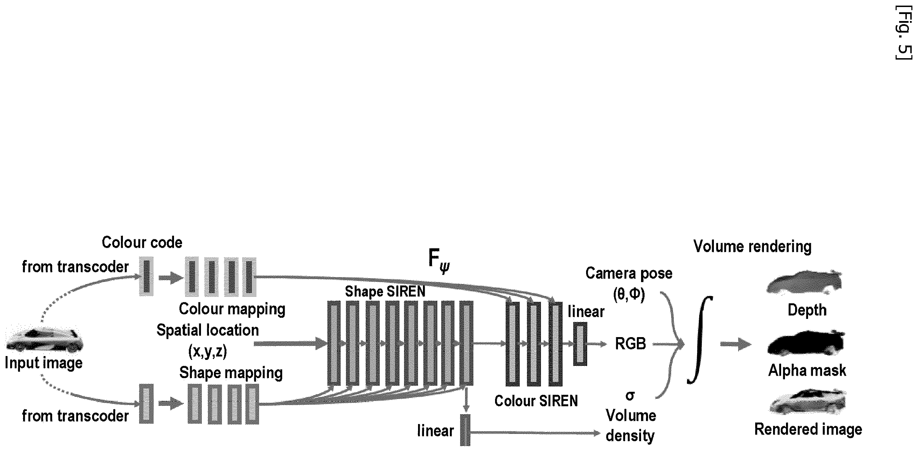

As illustrated by **Fig. 5****,** the decoder 203 (represented as *F_{ψ}*) may include a shape sinusoidal representation network (hereinafter "SIREN") and a colour SIREN for respectively determining the volume densities and the colour values of the sampled points. The shape SIREN, modulated by the shape code, takes the spatial location of a sampled point as input and produces the volume density at the spatial location. One of the layers (such as the penultimate layer) of the shape SIREN feeds into the colour SIREN, which is modulated by the colour code and produces the colour value at the spatial location. Each of the SIRENs may include one or more hidden feature layers and a final linear layer.

A SIREN is a neural network architecture for implicit neural representations that uses the sine as a periodic activation function, which was first introduced in the following paper P4:
Vincent Sitzmann, Julien N. P. Martel, Alexander W. Bergman, David B. Lindell, and Gordon Wetzstein. 2020. "Implicit neural representations with periodic activation functions". In Proceedings of the 34th International Conference on Neural Information Processing Systems (NIPS'20). Curran Associates Inc., Red Hook, NY, USA, Article 626, 7462-7473.

The decoder 203 may further include one or more mapping networks which condition the activation function for determining the volume densities on the shape code and condition the activation function for determining the colour values on the color code. For example, as illustrated by **Fig. 5****,** the one or more mapping networks are one or more hypernetworks, which take as input the shape code and output the weights or biases of the shape SIREN, and take as input the colour code and output the weights or biases of the colour SIREN. Each of the one or more hypernetworks may be a ReLU MLP. The weights may be the angular frequencies and the biases may be the phase shifts of the SIREN.

As illustrated by **Fig. 2** in combination with **Fig. 4(b)****,** in an implementation mode of first embodiment, the method 100 further includes an operation S104B of the transcoder 202 processing the latent code to predict an original camera view direction from which the input image was generated. For example, the transcoder 202 only processes the first layer of the latent code for a style-based GAN.

The camera of the NeRF according to the first embodiment of the disclosure may be assumed to lie on the surface of a sphere with objects centered at its origin. The camera viewing angle is fully determined by the rotations θ (azimuth) and φ (elevation) around the vertical and horizontal axes, respectively.

In particular, the prediction at the operation S104B may be implemented by a camera pose regressor 2022 of the transcoder 202. As illustrated by **Fig. 3(b)****,** the pose regressor 2022 may include an initial prediction block 301 and one or more refinement blocks 302. The blocks 301 and 302 may each include an MLP consisting of fully connected layers and activation functions. Further, the initialisation and refinement blocks 301 and 302 may be trained as angle classifiers. As an example, angles are defined by 365 equally spaced bins between 0 and 2π.

In the specific example as illustrated by **Fig. 3(b)****,** the camera pose regressor 2022 is a neural network processing the first layer latent code in the W⁺ latent space of a style-based GAN to predict the original camera view direction and the number of refinement blocks is 2.

Accordingly, as illustrated by **Fig. 4(b)****,** in an example of the operation S104B, the initial prediction block 301 processes the first layer latent code to make a first rough "guess" of the original camera view direction at an sub-operation S1041, then at an sub-operation S1042 one of the one or more refinement blocks 302 predicts a residual between the rough "guess" and the original camera view direction according to the first layer latent code and the rough "guess" and updates the prediction according to the residual. The sub-operation S1042 is repeatable. For example, the pose regressor 2022 may include two refinement blocks 302, the updated prediction of one of the refinement blocks 302 is fed to the other refinement block 302 which further updates the prediction by predicting another residual.

In an implementation mode of the first embodiment, before the operation S104A the method further includes an operation of casting camera rays into the 3D volume to generate the sampled points. An example of the procedure is illustrated by Figure 3 of the following paper P5:
Eric Chan, Marco Monteiro, Petr Kellnhofer, Jiajun Wu, and Gordon Wetzstein. "pigan: Periodic implicit generative adversarial networks for 3d-aware image synthesis". arXiv preprint arXiv:2012.00926, 2020.

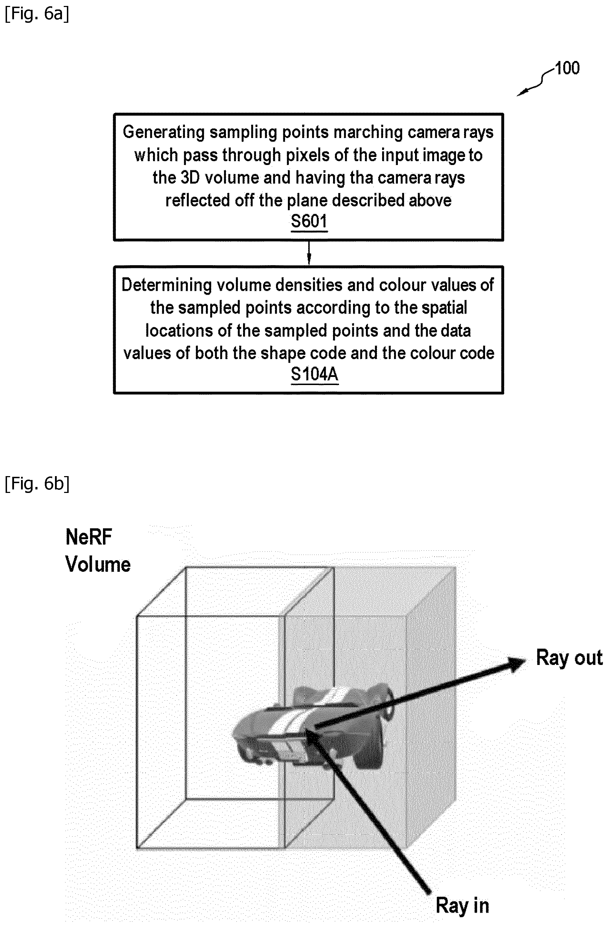

In an example of this implementation mode, the 3D representation of the object has a plane of symmetry, which is in a plane including two coordinate axes of the 3D Cartesian coordinate system for determining the spatial location of each point in the 3D volume. The z-axis may be the camera axis as defined in the paper P3. As illustrated by **Fig. 6(a)****,** before the operation S104A the method 100 further includes an operation S601 of generating the sampling points by marching camera rays which pass through pixels of the input image to the 3D volume and having the camera rays reflected off the plane described above. An example of the operation S601 is illustrated by **Fig. 6(b)****,** where the object is a vehicle and the plane is the y-z plane. The sampled points may only be along the incident paths of the camera rays.

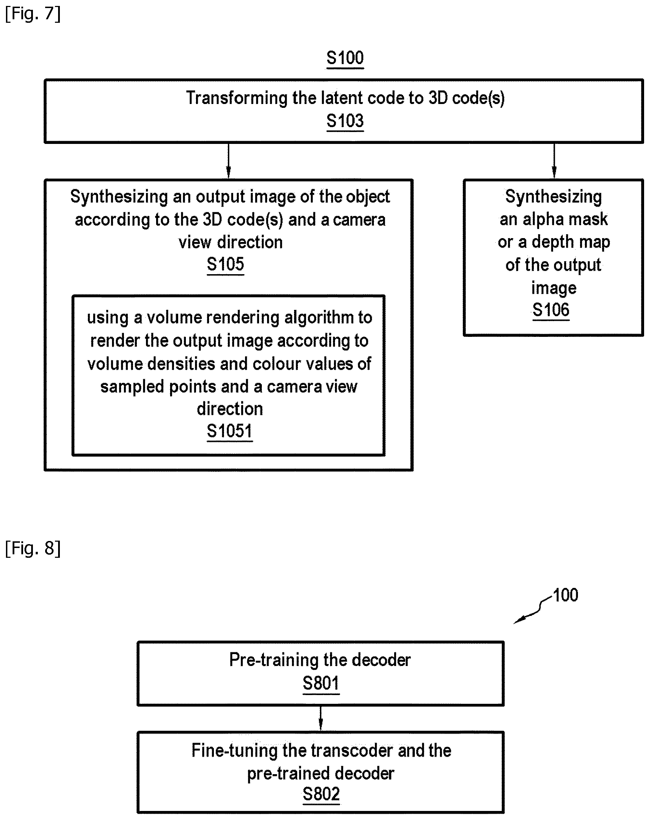

As illustrated by **Fig. 2** in combination with **Fig. 7****,** in an implementation mode of the first embodiment, the method 100 further includes an operation S105 of the neural network system 200 synthesizing an output image of the object according to the one or more 3D codes and a camera view direction. The output image may be a 2D image. The operation S105 is implemented by a rendering module 204 of the neural network system 200. The rendering module 204 may include one or more neural networks.

The camera view direction is the same as or different from the original camera view direction. As an example, the camera view direction is determined by the neural network system 200 based on a user-input instruction indicating the camera view direction. Then at the operation S105 the output image is synthesized according to the data value(s) of the one or more 3D codes and the camera view direction indicated by the user-input instruction.

In particular, in another example of the operation S105 as illustrated by **Fig. 7****,** the operation S105 includes a sub-operation S1051 of the neural network system 200 using a volume rendering algorithm to render the output image according to volume densities and colour values of sampled points and the camera view direction.

The sub-operation S1051 may be implemented according to the volume rendering algorithm described in section 3.2 of the paper P5. In particular, if before the operation S105 the operation S601 is implemented and the camera rays do not pass through at least some pixels of the output image because they would be blocked by the y-z plane, then these pixels may be rendered according to other pixels which the camera rays pass through.

As illustrated by **Fig. 5** in combination with **Fig. 7****,** in an implementation mode of the first embodiment, the method 100 further includes an operation S106 of synthesizing an alpha mask and/or a depth map of the output image.

The operation S106 may be performed according to one or more of following parameters by using the volume rendering algorithm: the volume densities and the colour values of the sampled points, and the camera view direction for synthesizing the output image. It may also be performed by the rendering module 204.

As illustrated by **Fig. 8****,** a computer-implemented method 800 for training the neural network system 200 according to the second embodiment of the disclosure includes an operation S801 of pre-training the decoder 203. The method 800 may further include an operation S802 of fine-tuning the transcoder 202 and the pre-trained decoder 203 or an operation of training the encoder 201.

At the pre-training operation S801, 3D codes governing one or more attributes of 3D representations of objects are input into the decoder 203, and camera view directions are input into the rending module 204 so that the rending module 204 synthesizes images according to the output of the decoder 203 and the camera view directions. The 3D codes and the camera view directions may be sampled from respective distributions of a first training data set. The distributions may be normal or standardized distributions.

At least one of the following three losses is used for pre-training the decoder 203: an adversarial loss L_{adv}, an object mask loss Lₘₐₛₖ, and a pose constraint loss Lₚₒₛₑ.

At the fine-tuning operation S802, latent codes are input into the transcoder 202 to be transformed into 3D codes governing one or more attributes of 3D representations of objects. The latent codes may be generated by the pre-trained encoder 201 from training images of a second training data set. The transcoder 202 further predicts original camera view directions based on the latent codes, and the 3D codes are fed into the pre-trained decoder 203, so that the neural network system 200 synthesizes images according to the output of the pre-trained decoder 203 and the predicted original camera view directions. One or more reconstruction losses are used for the fine-tuning.

Details of the method 800 are described below.

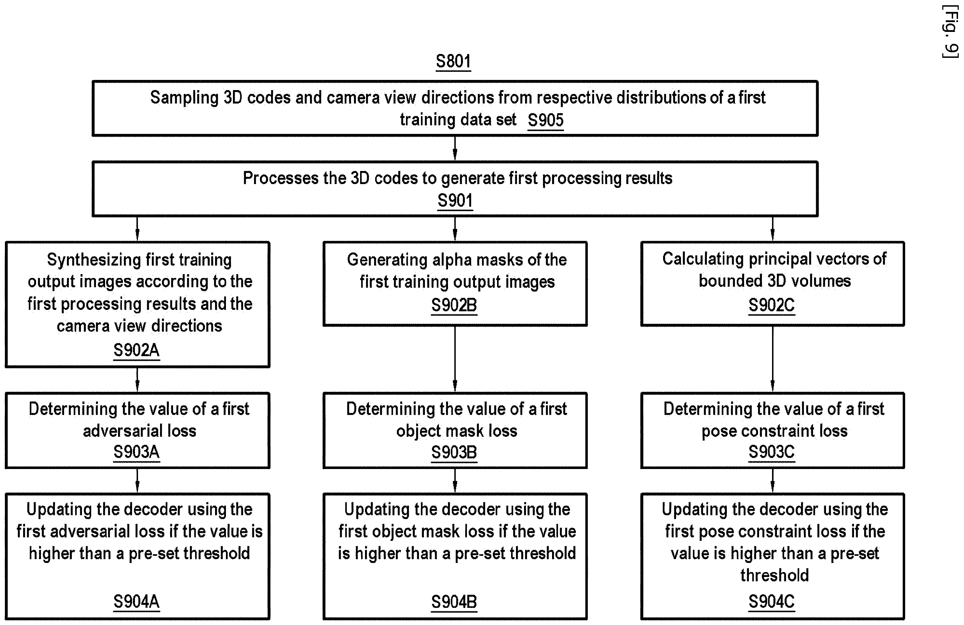

As illustrated by **Fig. 9****,** in an implementation mode of the operation S801, the pre-training operation S801 includes sub-operations S901, S902A, S903A, and S904A. It may further include a sub-operation S905. At the sub-operation S901 the decoder 203 processes 3D codes to generate first processing results. The 3D codes are the same as those described above in the first embodiment, except that the 3D codes for pre-training the decoder 203 can include those for reconstructing different 3D representations of different 3D objects. That is, the 3D codes govern one or more attributes of mathematical 3D representations of objects. They may be sampled from one or more 3D code distributions of a first training data set at the sub-operation S905.

At the sub-operation S902A, the neural network system 200 synthesizes first training output images according to the first processing results and camera view directions. The camera view directions may be sampled from a camera view direction distribution of the first training data set at the sub-operation S905. The first training data set may include no pose labels, meaning that the camera view directions from which training data of the first training data set was generated are not labelled or pre-annotated. In other words, the pre-training operation S801 can be unsupervised.

At the sub-operation S903A, the value of a first adversarial loss L_{adv}, which measures the difference between the first training output images and images in the first training data set, is determined.

At the sub-operation S904A, the decoder 203 is updated using the first adversarial loss L_{adv} if the value is higher than a pre-determined adversarial loss threshold. For example, a set of parameters/weights of the one or more neural networks of the decoder is adjusted.

In particular, the sub-operation S903A may be performed by a discriminator. The discriminator is differentiable and may have the same architecture as the progressive growing discriminator in a π-GAN model.

In an implementation mode of the operation S801, the pre-training operation S801 includes the sub-operation S901 and sub-operations S902B, S903B and S904B which may be alternative or additional to the sub-operation S902A, S903A and S904A. It may further include the sub-operation S905. At the sub-operation S902B, the neural network system 200 generating alpha masks of the first training output images. The alpha masks may be generated according to the first processing results and the camera view directions, or may be generated based on the first training output images.

At the sub-operation S903B, the value of a first object mask loss Lₘₐₛₖ, which measures the difference between the alpha masks generated at the sub-operation S902B and ground truth alpha masks of the first training output images, is determined. The ground truth may be generated by a pre-trained segmentation network. Each sub-loss of the object mask loss Lₘₐₛₖ may be formulated as the cross entropy between an alpha mask and a corresponding ground truth.

At the sub-operation S904B, the decoder 203 is updated using the first object mask loss Lₘₐₛₖ if the value is higher than a pre-determined mask loss threshold.

To further enforce the 3D representation of the object align well, in an implementation mode of the operation S801, the pre-training operation S801 includes the sub-operation S901 and sub-operations S902C, S903C and S904C which may be alternative or additional to the sub-operation S902A, S903A and S904A. At the sub-operation S902C, the principal vectors of bounded 3D volumes where the 3D representations of the objects are located are calculated. The calculation may be implemented by using a differentiable singular value decomposition (hereinafter "SVD") algorithm.

At the sub-operation S903C, the value of a first pose constraint loss Lₚₒₛₑ, which includes sub-losses each measuring the difference between the direction of one of the calculated principal vectors and the direction of a 3D Cartesian coordinate axis in the 3D volume corresponding to the principal vector, is calculated. The normalised dot product between this vector and the coordinate axis may be used to form the sub-loss.

At the sub-operation S904C, the decoder 203 is updated using the first pose constraint loss Lₚₒₛₑ if the value is higher than a pre-determined pose constraint loss threshold.

In particular, the principal vectors may be determined according to the geometric shape of the 3D representations of the object or according to volume densities in the 3D volumes. Each of the 3D representations of the objects may have a plane of symmetry, and the 3D Cartesian coordinate axis may be intended to align with the plane of symmetry, e.g., the z-axis.

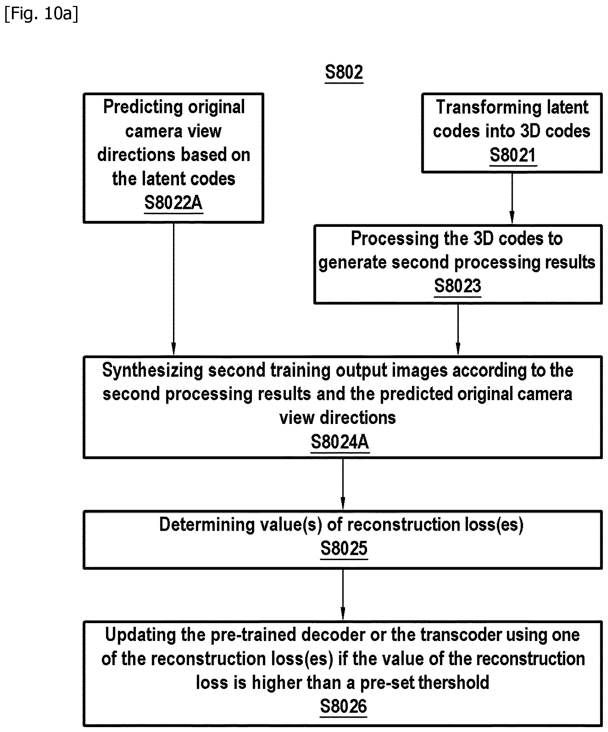

As illustrated by **Fig. 10(a)****,** in an implementation mode of the fine-tuning operation S802, the fine-tuning operation S802 includes sub-operations S8021, S8022A, S8023, S8024A, S8025, and S8026.

At the sub-operation S8021, the transcoder 202 transforms latent codes governing attributes of training input images to 3D codes controlling one or more attributes of mathematical 3D representations of objects. The latent codes are the same as those described in the first embodiment and the 3D codes are the same as those described in the implementation modes of the pre-training operation S801. It is not necessary for the camera view directions from which the training input images were generated to be labelled or pre-annotated. In other words, the fine-tuning operation S802 can be unsupervised.

At the sub-operation S8022A, the transcoder 202 predicts, based on the latent codes, the original camera view directions from which the training input images were generated.

At the sub-operation S8023, the pre-trained decoder 203 processes the 3D codes to generate second processing results.

At the sub-operation S8024A, the neural network system 200 synthesizes second training output images according to the second processing results and the predicted original camera view directions.

At the sub-operation S8025, one or more values of one or more reconstruction losses which measure difference between the second training output images and the training input images are determined.

At the sub-operation S8026, the pre-trained decoder 203 or the transcoder 202 is updated using the one or more reconstruction losses if one of the one or more values is higher than a pre-determined reconstruction loss.

The one or more reconstruction losses may include photometric loss such as a photometric L2 loss between the pixel-wise values of the input and output, or a perceptual loss such as a visual geometry group (hereinafter "VGG") based perceptual loss. Accordingly, the value of either loss may be determined by using a loss network.

As such, the fine-tuning operation S801 does not require the camera view direction of the training input images to be known in advance.

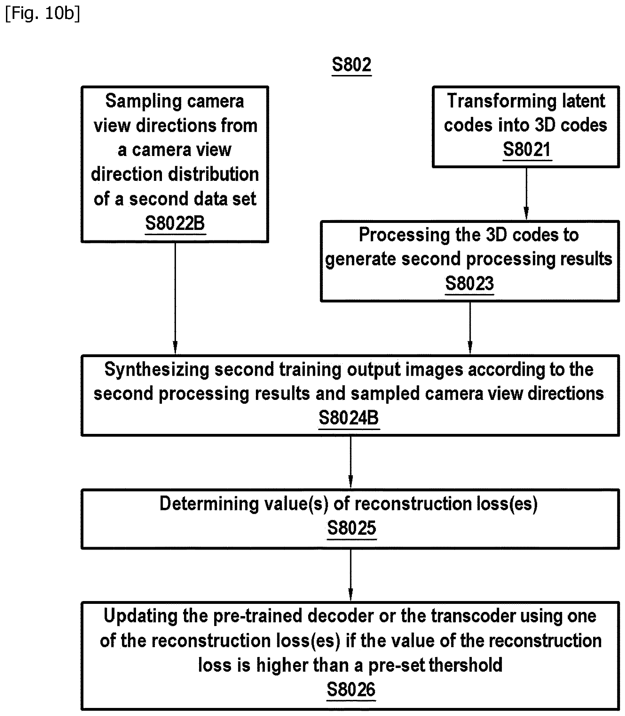

As illustrated by **Fig. 10(b)****,** in an implementation mode of the fine-tuning operation S802, the fine-tuning operation S802 includes the sub-operations S8021, S8023, S8025, and S8026, and sub-operations S8022B and S8024B which may be alternative or additional to the sub-operation S8022A and S8024B. At the sub-operation S8022B, camera view directions are sampled from a camera view direction distribution of a second training data set. The second training data set may include the training input images and may be the same or different from the first training data set. The sub-operation S8022B may be omitted if the sub-operation S8024B is implemented based on the camera view directions sampled at the sub-operation S905. Pose labels are not necessary for the second training data set.

At the sub-operation S8024B, the neural network system 200 synthesizes second training output images according to the second processing results and the sampled camera view directions.

As an example, when the one or more reconstruction losses includes a photometric loss, in addition to the operations S8022A and S8024A, the fine-tuning operation S802 may further include an operation of the neural network system 200 synthesizing second training output images according to the second processing results and camera view directions sampled from a camera view direction distribution of a second training data set.

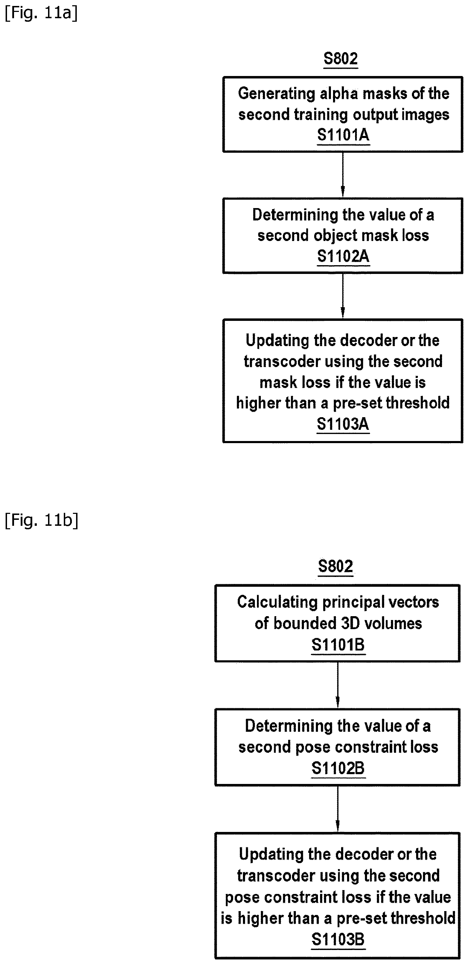

As illustrated by **Fig. 11(a)****,** based on the preceding implementation modes described with reference to **Fig. 10(a)** and **10(b)****,** the fine-tuning operation S802 may further include a sub-operation S1101A of the neural network system 200 generating alpha masks of the second training output images, a sub-operation S1102A of determining the value of a second object mask loss Lₘₐₛₖ, which measures the difference between the generated alpha masks and ground truth alpha masks of the second training output images, and a sub-operation S1103A of updating the decoder 203 or the transcoder 202 using the second object mask loss Lₘₐₛₖ if the value is higher than the pre-set mask loss threshold.

Additionally or alternatively, as illustrated by **Fig. 11(b)****,** the fine-tuning operation S802 may further include a sub-operation S1101B of calculating the principal vectors of bounded 3D volumes where the 3D representation of the objects are located, a sub-operation S1102B of determining the value of a second pose constraint loss Lₚₒₛₑ, which includes sub-losses each measuring the difference between the direction of one of the calculated principal vectors and the direction of a 3D Cartesian coordinate axis in the 3D volume corresponding to the principal vector, and a sub-operation S1103B of updating the decoder 203 or the transcoder 202 using the second pose constraint loss Lₚₒₛₑ if the value is higher than the preset pose constraint loss threshold.

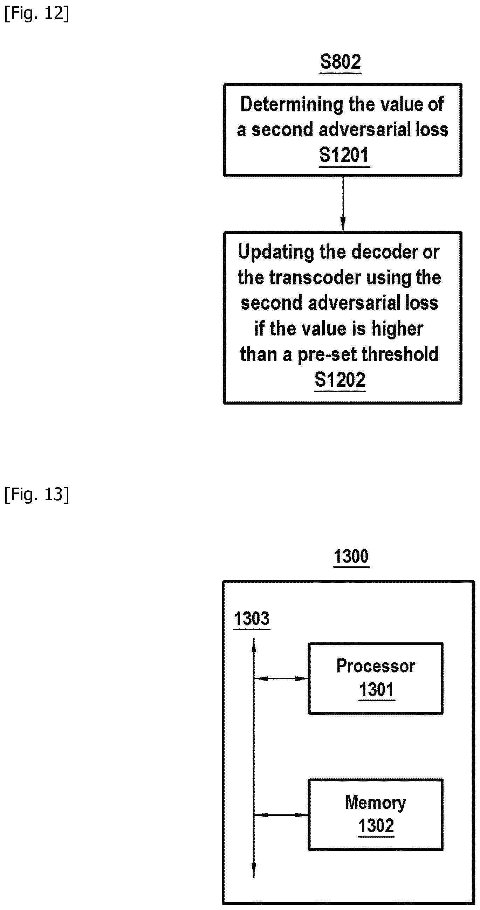

As illustrated by **Fig. 12** in an implementation mode of the fine-tuning operation S802, the fine-tuning operation S802 may further include a sub-operation S1201 of determining the value of a second adversarial loss L_{adv}, which measures the difference between the second training output images and the training input images, and a sub-operation S1202 of updating the pre-trained decoder 203 or the transcoder 202 using the second adversarial loss L_{adv} if the value is higher than the preset adversarial loss threshold.

The sub-operations S1201 and S1202 may replace the sub-operations S8025 and S8026 in the preceding implementation modes of the fine-tuning operation S802. Or, a part of the latent codes are used for fine-tuning the transcoder 202 and the decoder 203 with the one or more reconstruction losses, the second object mask loss Lₘₐₛₖ, and the second pose constraint loss Lₚₒₛₑ, and the rest of the latent codes are used for fine-tuning the transcoder 202 and the decoder 203 with the second adversarial loss L_{adv}, the second object mask loss Lₘₐₛₖ, and the second pose constraint loss Lₚₒₛₑ.

As such, the training method according to the second embodiment requires no human supervision and no pose training labels is necessary.

Further details for implementing the various implementation modes/examples of the second embodiment can be found in the description of the first embodiment.

As illustrated by **Fig. 13****,** a computing system 1300 according to the third embodiment of the disclosure includes one or more processors 1301 configured to implement the method according to any one of the implementation mode of the first embodiment or the second embodiment. Accordingly, the "computer" in the term "computer-implemented" as mentioned in the second embodiment and in the summary section may refer to the computing system 1300.

Examples of the one or more processors 1301 may include a central processing unit (hereinafter "CPU"), a vision processing unit (hereinafter "VPU"), a graphics processing unit (hereinafter "GPU"), a tensor processing unit (hereinafter "TPU"), a neural processing unit (hereinafter "NPU"), a neural processing engine, a core of a CPU, VPU, GPU, TPU, NPU or another processing device, an application processor, a display controller, an application specific integrated circuit (hereinafter "ASIC"), a field programmable gate array (hereinafter "FPGA"), a coprocessor, or any other hardware configured to function as a processing unit.

In addition, the computing system 1300 may include one or more computing devices each including at least one of the one or more processors 1301. Examples of the computing device include a high-performance computer, a server, a user device (e.g., a laptop computer, a home desktop computer, a mobile device such as a tablet, a smart phone, a wearable device, etc.), an embedded device (e.g., a device embedded within a vehicle, a camera, an image sensor, a household appliance, etc.), a platform having one or more corresponding application programming interfaces (hereinafter "APIs"), a cloud infrastructure, or any other computing device suitable for perform one or more operations of the method according to the first or second embodiment.

Further, the one or more computing devices may each include one or more communication modules configured to communicate with each other via wired or wireless network(s) by transmitting or receiving network signals over network(s). Examples of a communication module include a network interface card such as an Ethernet card, an optical transceiver, a radio frequency transceiver, a universal serial bus controller, or any other device that can send or receive information.

The computing system 1300 may further include one or more memories 1302 storing instructions. When executed by the one or more processors 1301, the instructions enable the one or more processors 1301 to perform the method according to any one of the implementation mode of the first embodiment or the second embodiment.

A memory 1302 may be volatile or non-volatile. Examples of the one or more memories 1302 include a random access memory (hereinafter "RAM"), a dynamic random access memory (hereinafter "DRAM"), a static random access memory (hereinafter "SRAM"), any other form of volatile memory known in the art, a magnetic hard disk, an optical disk, a floppy disk, a flash memory, an electrically programmable memory (hereinafter "EPROM"), an electrically erasable and programmable memory (hereinafter "EEPROM"), any other form of non-volatile memory known in the art, a data server, etc.

A processor 1301, memory 1302, and a communicating module of a computing device of the computing system 1300 may be directly or indirectly coupled to each other physically, communicatively, or operationally via a communication channel 1303. The communication channel 1303 may include one or more buses (such as an address bus, data bus or combination thereof), a network connection, an inter-process communication data structure, or any other means for communicating data.

According to a fourth embodiment of the disclosure, a computer-readable storage medium is configured to store one or more instructions which, when executed by a processor, cause the processor to perform the method according to any one of the implementation mode of the first embodiment or the second embodiment. As used herein, a "computer-readable medium" includes one or more of any suitable media for storing the executable instructions of a computer program such that the instruction execution machine, system, apparatus, or device may read (or fetch) the instructions from the computer-readable medium and execute the instructions for carrying out the described embodiments. Suitable storage formats include one or more of an electronic, magnetic, optical, and electromagnetic format.

The storage medium may be the same as the memory 1302 as described above. The storage medium may include hard disk drive and/or a removable storage drive, representing a floppy disk drive, a magnetic tape drive, a compact disk drive, digital versatile disk (hereinafter "DVD") drive, recording device, universal serial bus (hereinafter "USB") flash memory. The removable storage drive reads from and/or writes to a removable storage unit in a well-known manner.

Another aspect of the invention pertains to a computer program product downloadable from a communication network and/or recorded on a medium readable by computer and/or executable by a processor, comprising program code instructions for implementing the operations of the method according to the first or second embodiment of the disclosure.

The use of the terms "a" and "an" and "the" and similar references in the context of describing the subject matter (particularly in the context of the following claims) are to be construed to cover both the singular and the plural, unless otherwise indicated herein or clearly contradicted by context.

This invention having been described in particular embodiments, it is clear that it is susceptible to numerous modifications and embodiments within the scope of the invention as defined by the following claims.

## Claims

1. A computer-implemented method (100) for three-dimensional, 3D, reconstruction, comprising operations of:
receiving (S101) an input image depicting an object;
encoding (S102), by an encoder (201) comprising one or more neural networks, the input image to a latent code;
transforming (S103), by a transcoder (202) comprising one or more neural networks, the latent code to one or more 3D codes each controlling an attribute of a mathematical 3D representation of the object.

2. The method according to claim 1, wherein the 3D codes comprise:
a shape code comprising data values controlling a volume density of each point in a bounded 3D volume where the 3D representation of the object is to be located; and
a colour code comprising data values controlling a colour value of each point in the 3D representation of the object.

3. The method according to claim 2, further comprises:
determining (S104A), by a decoder (203) comprising one or more neural networks, the volume densities and colour values of sampled points in the bounded 3D volume according to spatial locations of the sampled points and the data values of both the shape code and the colour code.

4. The method according to claim 3, wherein the sampled points are generated by:
marching (S601) camera rays passing through pixels of the input image to the 3D volume and having the camera rays reflected off a plane comprising two coordinate axes of a 3D Cartesian coordinate system, wherein the spatial locations are represented by 3D coordinates in the 3D coordinate system, and the object has a plane of symmetry in the plane comprising the coordinate axes.

5. The method according to any one of the claims 1 to 4, wherein the transforming operation is implemented by a multi-layer perceptron of the transcoder (202).

6. The method according to any one of the claims 1 to 5, further comprising an operation of:
predicting (S104B), by the transcoder (202), an original view direction representing a camera viewpoint from which the input image was generated according to the latent code.

7. The method according to any one of the claims 1 to 6, further comprising operations of:
receiving a user-input instruction indicating a camera view direction from which an output image of the object is to be generated; and
synthesizing the output image based on one or more data values of the one or more 3D codes and the camera view direction indicated by the user-input instruction.

8. The method according to any one of the claims 1 to 7, wherein the latent code is a latent code governing response of a generative adversarial network, GAN, and the encoding operation (S102) comprises:
using a GAN inversion algorithm to encode the input image to the latent code.

9. A computer-implemented method (800) for training a three-dimensional, 3D, reconstruction neural network system (200), comprising an operation of pre-training (S801) a decoder (203) of the neural network system (200), wherein the pre-training operation (S801) comprises operations of:
processing (S901), by the decoder (203), 3D codes controlling one or more attributes of mathematical 3D representations of objects to generate first processing results controlling the one more attributes;
synthesizing (S902A), by the neural network system (200), first training output images according to the first processing results and camera view directions;
determining (S903A) a value of a first adversarial loss measuring difference between the first training output images and images in the first training data set; and
updating (S904A) the decoder (203) using the first adversarial loss if the value is higher than a pre-set adversarial loss threshold.

10. The method (800) according to claim 9, wherein the pre-training operation (S801) further comprises:
sampling (S905) the 3D codes from one or more 3D code distributions of a first training data set, and sampling the camera view directions from a camera view direction distribution of the first training data set, wherein camera view directions from which training data of the first training data set was generated are not labelled.

11. The method (800) according to claim 9 or 10, wherein the pre-training operation (S801) further comprises:
generating (S902B), by the neural network system (200), alpha masks of the first training output images; and
determining (S903B) a value of a first object mask loss measuring difference between the generated alpha masks and ground truth alpha masks of the first training output images,
wherein the updating operation (S904A) comprises:
updating the decoder (203) using the first adversarial loss and the first object mask loss if the value of the first adversarial loss is higher than the pre-set adversarial loss threshold and the first object mask loss is higher than a pre-set mask loss threshold.

12. The method (800) according to claim 9 or 10, wherein the pre-training operation (S801) further comprises:
calculating (S902C) principal vectors of bounded 3D volumes; and
determining (S903C) a value of a first pose constraint loss comprising sub-losses each measuring difference between a direction of one of the principal vectors and a direction of a 3D Cartesian coordinate axis in the 3D volume corresponding to the principal vector,
wherein the 3D representations of the objects are located in the bounded 3D volumes, and
the updating operation (S904A) comprises:
updating the decoder (203) using the first adversarial loss and the first pose constraint loss if the value of the first adversarial loss is higher than the pre-set adversarial loss threshold and the first pose constraint loss is higher than a pre-set pose constraint loss threshold.

13. The method (800) according to any one of the claims 9 to 12, further comprising an operation of fine-tuning (S802) the pre-trained decoder (203) and a transcoder (202) of the neural network system (200), wherein the fine-tuning operation (S802) comprises operations of:
transforming (S8021), by the transcoder (202), latent codes governing attributes of training input images into 3D codes controlling one or more attributes of mathematical 3D representations of objects;
predicting (S8022A), by the transcoder (202), original camera view directions from which the training input images were generated based on the latent codes;
processing (S8023), by the pre-trained decoder (203), the 3D codes to generate second processing results controlling the one or more attributes;
synthesizing (S8024A), by the neural network system (200), second training output images according to the second processing results and the predicted original camera view directions;
determining (S8025) one or more values of one or more reconstruction losses measuring difference between the second training output images and the training input images; and
updating (S8026) the pre-trained decoder (203) or the transcoder (202) using one of the one or more reconstruction losses if the value of the reconstruction loss is higher than a pre-set reconstruction loss threshold.

14. A computing system (1300), comprising:
one or more processors (1301) configured to implement the method according to any one of the claims 1-8 or according to any one of the claims 9-13.

15. A computer-readable storage medium (1302), storing instructions which, when executed by one or more processors (1301), enable the one or more processors (1301) to perform the method according to any one of the claims 1-8 or according to any one of the claims 9-13.
